# EUROPEAN PATENT APPLICATION

(11) **EP 2 804 089 A1**
(43) Date of publication of application: **19.11.2014**
(21) Application number: 14168135.3
(22) Date of filing: 13.05.2014
(51) Int. Cl.: G06F 3/0488

(54) **System and method for presenting video and information**

(30) Priority: 14.05.2013 US 201361823097 P
(71) Applicant: Sstatzz Oy, 00220 Helsinki (FI)
(72) Inventor: Hohteri, Harri, 00180 Helsinki (FI); Gatial, Thomas, 96001 Zvolen (SK); Mäkinen, Vesa-Matti, 00250 Helsinki (FI)
(74) Representative: Becker Kurig Straus

(57) **Abstract**

A system and method for presenting video and information can be used to select statistics or events of the game. A user interface includes an overlay on top of a statistics display or video display to enable easy rewinding of statistics or videos back and forth. The system can also be used to send statistics or related video to a remote display for sharing the information.

## Description

### FIELD

The disclosed embodiments generally relate to a system and a method for presenting video and additional information, and more specifically to a user interface (UI) with gesture controls and user controls for assembling and presenting the video and information. Further, aspects of the disclosure are also directed to viewing video and related information of events using the UI.

### BACKGROUND

In various team sports, officials of a game and other people collect statistics such as shots, passes, points of the game. These game statistics can then be associated with a time line and recorded videos of the game. The statistics and recorded videos are viewed by spectators, coaches, and players during and after the game for various purposes such as game analysis or for entertainment, etc. Examples of such recordings may include, for example, a video of a game of basketball for broadcasting purposes or for use by coaches to evaluate how well a player works within the team context, strength and weakness analysis, shots, assists, rebounds, steals turnovers, or game improvement leads.

There are known methods for collecting statistics and associated video data and one such system has been described by the applicant in a patent application number US 13/471,404 filed on 14th May 2012. Typically, users view game videos on a computer, laptop, or television by viewing complete videos or selecting events and points in the game to view a specific video section.

The problem associated with prior systems and methods include an inability of users, especially coaches, of the system to track game progress or study videos and statistics in real time and an inability to use a portable computing and communication device such as tablet, mobile phone, and iPad®. Additionally, there are inefficiencies in available systems for displaying and selecting the statistics and related videos for a team or player.

Hence, there exists a need for a system, method, and a user interface that solves the problems of viewing an event video associating statistics with appropriate portions of the event and controlling video playback, that reduces time spent in identifying relevant sections of the event, selecting relevant videos for observers, and controlling the video and statistics for the observers. It would be advantageous to implement the system, method and user interface on a portable computing and communication device such as tablet, mobile phone, and iPad® and that overcomes the above-mentioned limitations of existing methods of presenting information.

### SUMMARY

The disclosed embodiments provide a system and method for presenting video and additional information on various devices including mobile devices.

In one aspect, embodiments of the present disclosure provide a system for presenting video and information on the various devices. Optionally, the system includes a server system that collects and receives information from one or more venues over a communication network such as Internet, Local Area Network (LAN), Wide Area Network (WAN), etc. The information from the venues may include video and/or audio streams from one or more cameras recording an event, statistics collected from the event and location data of objects associated with the venue or the event, for example, participants or equipment.

While the disclosed embodiments are described in the context of a sporting event, it should be understood that the disclosed embodiments may be applicable to any suitable venue, for example, a concert hall, banquet hall, theater, sports arena, or any applicable location, and may be applicable to any suitable event, for example, a musical or theatrical presentation, an awards ceremony or other celebration, or even a simple gathering.

In the context of a sporting event, location data may be collected related to objects, such as players, referees and sporting equipment and projectiles used in the sport. Statistics may also include actions such shots, goals, points, penalties, special events, game breaks, special moves, game events etc. Optionally, location data can be collected, for example, using indoor and/or outdoor positioning means.

In accordance with at least one embodiment of the present disclosure, the server combines information sources to a common time line and may provide an analysis of the event. Said combining may enable interested parties such as subsequent viewers, participants, sports spectators, coaches, or broadcasters to easily select and access event related information. In some embodiments the information may be selectable and accessible over one or more communication networks such as the Internet, LAN, WAN, etc.

In accordance with another embodiment of the present disclosure, information from the server system can be accessed with a user terminal. The user terminal can be any suitable device, fixed, portable or mobile, and may include one or more mobile phones, portable computing devices, wireless enabled devices including, although are not limited to, smart phones, Mobile Internet Devices (MID), wireless-enabled tablet computers, Ultra-Mobile Personal Computers (UMPC), phablets, tablet computers, Personal Digital Assistants (PDA), web pads, cellular phones, iPhones®, laptops or desktop computers. The user terminal may have a touch screen to enable easy usage of the statistics services. The user terminal can also share all or some of the data to an external display device such as a large screen television, projection or other display used by other persons (for example other persons portable computing device). Video, as well as statistics and coordination footage can be presented in many ways. The server system can be configured to allow different levels of access for different users.

In another aspect of the disclosed embodiments, the system includes a user interface (UI) that is used to access information on the user terminals.

Optionally, the user interface has a configuration that may change depending on different orientations of the display, and may display various items including a time line, statistics, videos, and may include a gesture control for controlling various aspects of the user interface, for example, scrolling speed or the direction and speed of the video.

Optionally, the User interface configuration change may be based on an orientation of the display.

Optionally, the User interface can be used for displaying rich media content and gestures may be used to control the system user interface (UI). The gestures may include timeline scroll and resize gestures or playback control gestures.

In another aspect, an embodiment of the present disclosure provides a method for implementing gesture control and to prevent wrong recognition of gestures. The method facilitated gesture control provides enhanced video playback control and is user-friendly. The gesture control may simulate reel scrolling, further enhancing a user experience.

Further in accordance with an alternative or additional embodiment of the present disclosure, information from the server system can be accessed with a user terminal such as a mobile device with touch screen. The touch screen can be configured to detect multi touch gestures. The user gesture might include the user placing two fingers in the touch screen and determining a middle point between the two fingers. Further the two fingers can define a rectangular area on the screen i.e. an area for gesture detecting operation. Gesture detecting operation can have a point such as corner of the area (as a point of gesture detecting operation). Further the gesture can include detecting the changes in angle between this middle point and the point of the gesture detecting operation. The changes in the angle can define a velocity and a rotation velocity of a reel. The reel rotation velocity can correlate with playback parameters. Further the angle can be used to determine number of frames of video and/or statistics to perform seeking operation.

In accordance with yet another embodiment of the present disclosure, a system and method including the user interface (UI) can be used for various on field team sports such as hockey, football, American football, association football, basketball, volleyball, tennis, water polo, rugby, lacrosse, cricket, handball, ice hockey, and many others.

Additional aspects, advantages, features and objects of the present disclosure would be made apparent from the drawings and the detailed description of the illustrative embodiments.

It will be appreciated that features of the disclosed embodiments are susceptible to being combined in various combinations or further improvements without departing from the scope of the embodiments as disclosed herein.

### DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the disclosed embodiments are not limited to specific methods and instrumentalities disclosed herein. Moreover, those in the art will understand that the drawings are not to scale. Wherever possible, like elements have been indicated by identical numbers.
Figure 1 shows a high level architecture of a system according to the disclosed embodiments.
Figure 2 illustrates an example of providing different access to information for different users.
Figure 3 presents a general overview of items in the user interface.
Figure 4 presents an example of different configurations of the user interface (UI) as a result of different orientations of the display.
Figure 5 illustrates an example of a user interface including a layout of general information according to the disclosed embodiments.
Figure 6 presents an exemplary implementation of the system using a gesture controlled device.
Figure 7 presents examples of data panels that show team and individual defense strategies and events.
Figures 8A and 8B show use of the disclosed embodiments to display a video view and a statistics view, respectively.
Figures 9A and 9B illustrate additional exemplary combination video and statistic views.

### DETAILED DESCRIPTION

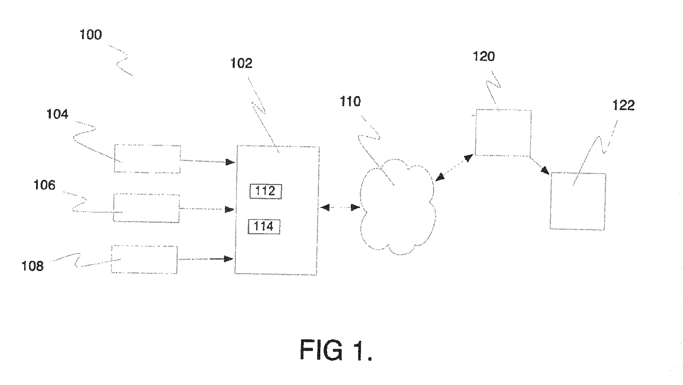

Referring now to the drawings, particularly by their reference numbers, Figure 1 shows a high level architecture of a system **100** for presenting video and information according to the disclosed embodiments. The system may include a server system **102** that collects and receives information from one or more venues or events over a communication network such as the Internet, LAN, WAN, etc. The information from the venues can include video and/or audio streams **104** from one or more cameras recording the event, statistics **106** collected from the event and location data **108** of objects. For a sporting event, the objects may include participants, players, referees and sporting equipment and projectiles used in the sport. Statistics can include actions such shots, goals, points, penalties, special events, game breaks, special moves, game events etc. Location data can be collected; for example using indoor and/or outdoor positioning means.

The server **102** combines information sources to a common time line and provides for analysis of the event. Said combining enables interested parties such as current or subsequent viewers, sports spectators, coaches, or broadcasters to easily select and access information over a communication network **110** such as the Internet.

In a non-limiting example, videos related to a certain statistic/event such as a goal and a time of the goal are identified from the statistics data **106**; the server system **102** selects the video data **104** at the identified time. The video steam can be selected such that it extends to a certain time before and after the event such as 20 sec before until 10 sec after the goal to make a 30 sec video clip. The duration can be dependent on users' preferences as well. Additionally, where the positions and/or direction of the cameras are known then the server **102** can further combine location data **108** of the players to enable following certain players during the making of the goal.

Information from the server system **102** can be accessed with user terminal **120**. The user terminal **120** can be one or more fixed, portable, or mobile computing devices or wireless enabled devices including, although not limited to, smart phones, Mobile Internet Devices (MID), wireless-enabled tablet computers, Ultra-Mobile Personal Computers (UMPC), phablets, tablet computers, Personal Digital Assistants (PDA), web pads, cellular phones, and iPhone®, laptops or desktops. In some embodiments the device may have a touch screen to enable easy usage of the statistics services. The user terminal **120** can also share all or some of the data with an external display device **122** such as a large screen television, projection or other display used by other persons (for example, other persons portable computing device). Video, as well as statistics and coordination footage can be presented in many ways. The server system **102** can be configured to allow different levels of access for different users.

In at least one of the disclosed embodiments, server 102 may include computer readable program code stored on at least one computer readable medium 112 for carrying out and executing the processes and methods described herein. The computer readable medium 112 may be a memory of server 102. In alternate aspects, the computer readable program code may be stored in a memory external to, or remote from server 102. The memory may include magnetic media, semiconductor media, optical media, or any media which may be readable and executable by a computer. Server 102 may also include a processor 114 for executing the computer readable program code stored on the at least one computer readable medium 112. In at least one aspect, computing apparatus may include one or more input or output devices, generally referred to, for example, the user interface (UI) described herein, which may operate to allow input to the server 102 or to provide output from the server 102, respectively.

Thus, the system comprises a processor and computer readable program code stored on a computer readable medium, and the processor, with the computer readable program code, is configured to receive one or more information streams from an event, collect statistics related to the event, collect location data of objects related to the event, and combine the information into a common time line for analysis of the event.

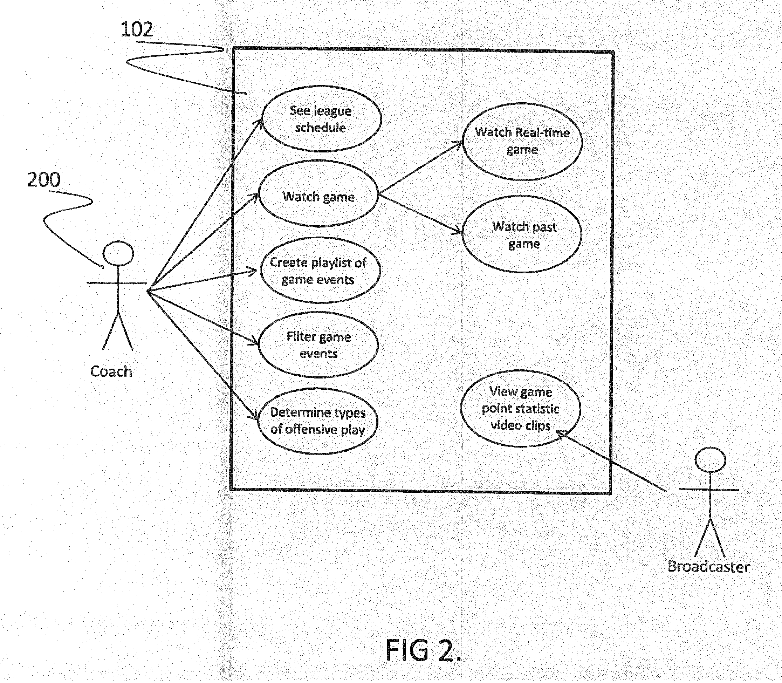

Figure 2 shows an example of providing different levels of access for different users and an example of providing data filtering features for certain users, for example, coaches. The processor, with the computer readable program code, as described above, is further configured to provide different access to the combined information for different users.

In Figure 2, the coach **200** may coach a team hosting an event or otherwise related to the event location. The coach **200** can access all information but other users use of the system may be restricted. For example, broadcasters **210** can only access game point statistics related video clips **212**. The server system **102** can be configured to provide services such as "See league schedule", "Watch game", "Watch Real-time game", "Watch past game" (recorded), "Create playlist of game events", "Filter game events", "Determine types of offensive games" etc. to users with elevated privileges such as coaches. The "league schedule" may contain upcoming games as well as past games with the results. Coach **200** would be able to watch the either real-time during the game or watch previous games. When watching a game, a feedback of statistics footage according to a current playback section would be presented. Coach 200 would also be able to filter game events according to defined criteria. This may further enable creation of an algorithm to determine types of offense plays according to coordination footage. This is one of many examples that can be used to describe the system and this should not unduly limit the scope of the embodiments disclosed herein. One of ordinary skill in the art would recognize many variations, alternatives, and modifications of the disclosed embodiments.

According to the disclosed embodiments, the system may include a user interface (UI) that is used to access information using the user terminal **120**. In some exemplary embodiments, the user terminal **120** may be a web tablet with a touch screen with multi touch support and may be used in a basketball game. The multi touch support refers to a device display's ability to recognize if there are two or more pointing devices or fingers touching the screen at the same time. The computing device may have a communication interface to access information from server system **102** through, for example, a wireless local area network, a cellular channel or a wired means. In an optional embodiment, the user terminal **120** is capable of further relying and/or communicating some or all of the information to an external device or display. In an optional embodiment the user terminal **120** has accelerometers to detect orientation of the user terminal **120** to determine which side of the user terminal **120** is up and which is down.

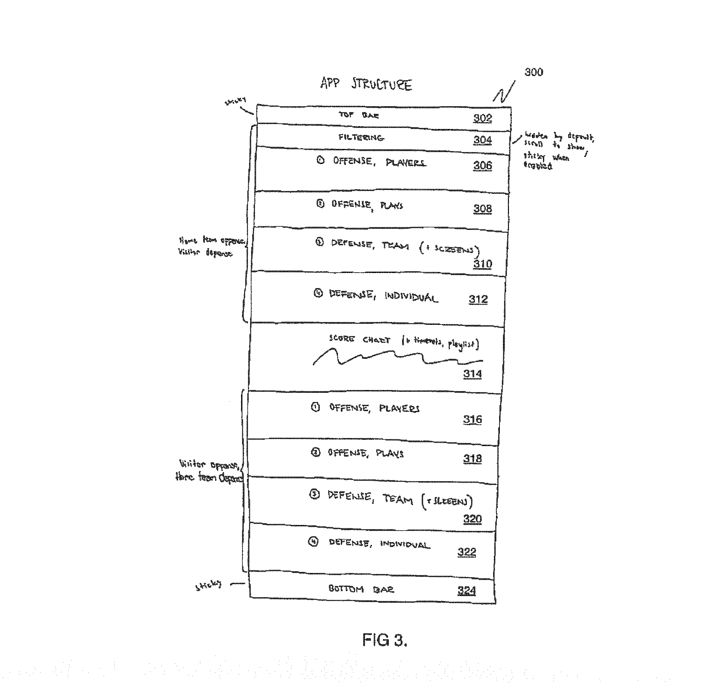

Figure 3 presents a general overview of exemplary items in the user interface (UI) **300** for a game of basketball. Top bar **300** is configured as sticky i.e. it stays always visible when using the UI. Items **306, 308, 310** and **312** show information related to when the home team is on offense (**306, 308**) and the visitor team is on defense (**310**, **312**). Item **314** shows a score chart of the game. Below the score chart are items **316**, **318**, **320** and **322** which show offensive and defensive information related to when the visiting team is on offense and the home team is on defense. Item **304** is a filter that may provide the ability to highlight user selected game events inside items **306**, **308**, **310**, **312**, **316**, **318**, **320 and 322**. There can be a sticky area **324** on the bottom.

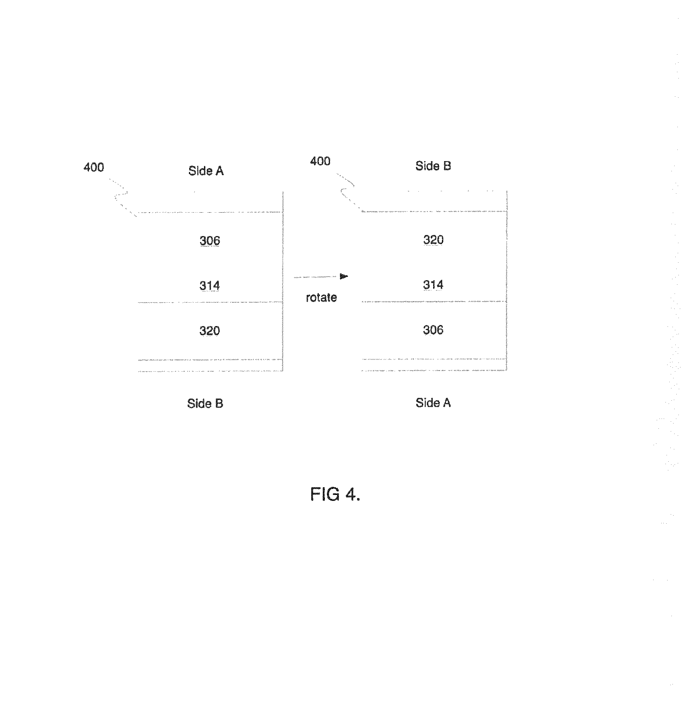

Figure 4 presents an example of different configurations of the user interface (UI) as a result of different orientations of the display. The processor, with the computer readable program code, as described above is further configured to provide a different information arrangement based on a display orientation and is further configured to provide different information based on a display orientation.

In prior art solutions, if a user terminal **120** is turned around or rotated, the UI typically turns or rotates so that the image is turned around to enable the same view independently of the orientation of the user terminal **120**. Based on the disclosed embodiments, the user interface may be modified based on the orientation of the display In at least one embodiment, the user interface orientation and change in orientation may be sensed by an accelerometer or other sensor in the user terminal **120**. In the example shown in Figure 4, the terminal has sides **Side A** and **Side B**. In an initial position, **side A** is assumed to be higher than **side B** i.e. the terminal may be held so that **Side A** is on top and **Side B** of the terminal is on the bottom. The user interface **400** of the terminal shows home team offense information **306** on the top, score chart **314** in the middle and home team defense information **320** on the bottom. As the terminal is rotated approximately 180 degrees to a second position, i.e. **Side B** to the top and **Side A** to the bottom, the information above and below the score chart **314** may be swapped, i.e. **320** will be on top of the score chart **314** and home team offense information **306** may be below the score chart **314**. This enables a viewer, such as a coach, to easily to swap the information view around in a more meaningful manner. The change of orientation of the tablet may change information content views around a mirror axis element (which in this example is score chart **314**).

In a further example, in the initial position, the portion of the user interface nearest the upper side (Side A) of the user terminal (above the mirror axis element) may include information contents related to certain statistics, such a as two point shots and three point shots, related to the home team, and the portion of the user interface nearest the lower side (Side B) of the user terminal (below the mirror axis element) may have information content, such as play time of the players, related to the visitor team. When the tablet is rotated to the second position, the portion of the user interface nearest the upper side may show the information content related to the visitor team, and the portion of the user interface nearest the lower side may show the information content related to the home team. In this example, the information content class may stay the same in the upper (such as two and three point shots) and lower portions (such as play time of the players) before and after rotation, but the team represented (home team, visitor team) in the upper and lower portions may change with the rotation. In other words, when the user terminal is rotated, the information content class for the visitor team would be same as it was for the home team before turning, ie. statistics related to two point shots and three point shots. The information content class for the home team would be the same as it was for the visitor team before turning i.e. statistics related to play time.

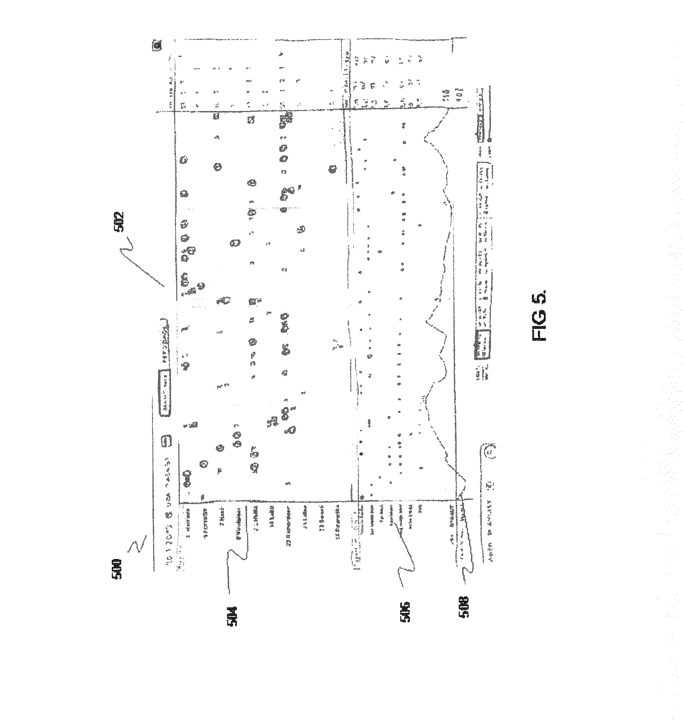

Figure 5 illustrates an example of user interface **500** and a layout of general information along a time line according to the disclosed embodiments. Section **504** shows statistical information content along the time line for an event, for example, a game. In this example, section 504 shows the points and play time of each player. Section **506** shows the occurrence of different types of offensive plays and statistics related to these plays. Section **508** is a score chart showing relative scoring information between two basketball teams as a graph. In at least one embodiment, the information shown in the user interface 500 may be selected based on user credentials, for example, a username and password. In an example where a coach is using the system, the application can then recognize the coach and an associated team or league. The main UI screen **500** puts emphasis into watching a single game. The timeline displays the time course of the game from the left side (beginning of the game) to the right side (end of the last period). The timeline is divided into sections. The sections may include players of the team, offensive sets, individual and team defense of the opposing team and a score graph. On the right panel the UI shows statistics calculated for the specific item: player, offensive play, defense type or individual defensive player.

The player section may display all the players participating in the game. Along the timeline, a time spent on the court is shown for each player by using player lanes. Icons of events associated with a certain player may be placed over the time on court indication. These icons can represent different activities, for example, field goals (distinguished by number of points obtained or not, or if the shot was contested by another player), free throws, rebounds, turnovers etc. On the right hand panel, player specific statistics are present.

The offensive plays section shows the detected type of offensive plays used in the game. These offensive plays can be defined by the coach and detected from the coordinate footage automatically. A coach may also be able to define the name of the offensive play. On the right hand panel, with logic similar to the player section, the offensive play specific statistics are calculated.

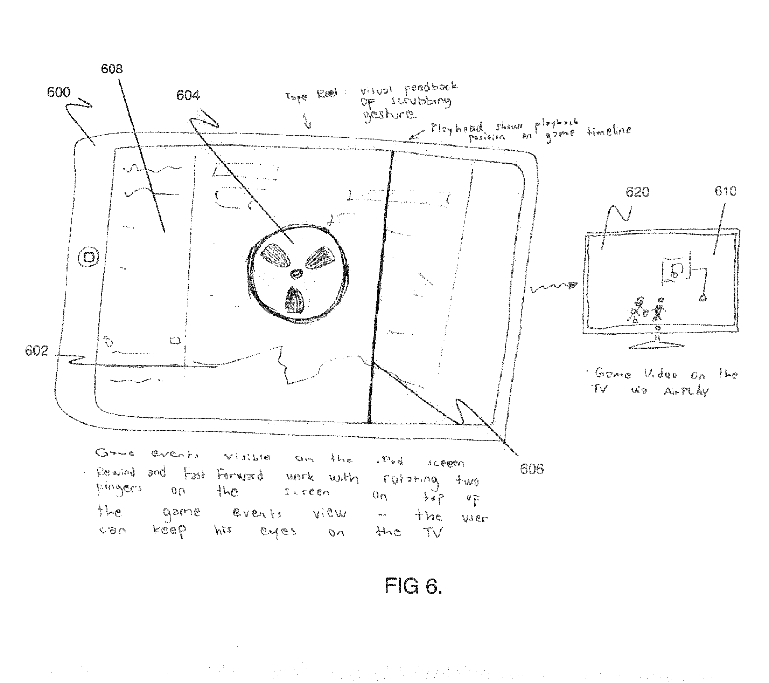

Figure 6 presents an exemplary implementation of the system using a gesture controlled device **600**, for example, an Apple® iPad®. In at least one embodiment, the processor, with the computer readable program code, is further configured to display the common time line in a statistical view and a video view. The system of Figure 6 shows a mechanism for event playback in both the statistics view **608** and the video view **610**.

In at least one embodiment, the processor, with the computer readable program code, is further configured to provide a gesture control mechanism such that playback in the statistics view and video view are synchronized, where scrolling through one view causes a synchronized playback of the other view. While the statistics view **608** and video view **610** are shown on different devices, it should be understood that both views may also be shown on the same device as will be explained further below. In other embodiments, the statistics view and video view may be displayed and controlled individually.

The processor, with the computer readable program code, is further configured to provide a gesture control mechanism in at least one of the statistical view and video view.

The gesture controlled device **600** may be operable for controlling video playback or statistics playback and may include a gesture based control on a touch screen for watching videos related to the time line. In at least one embodiment, the processor, with the computer readable program code, as described above, is configured to control a display of the combined information using gestures.

In prior art video play back solutions, a user points with a finger or other pointer to a place on the time line where the user wants to show the video. This is not user friendly, particularly in the case of showing fast movements in sports. For example, using a finger or pointer, one may not be able to control the speed of the video precisely and may not be able to go, for example, frame by frame back and/or forth.

According to the disclosed embodiments, the user interface (UI) includes a gesture control for controlling playback. In Figure 6, there are information contents in the statistics view 608 on the screen such as score chart **602**. The gesture control in this embodiment is an overlay UI element wheel **604** in the statistics view. The wheel **604** can be rotated counter clockwise and clockwise using a rotating gesture, for example, with fingers or a pointer. As the user rotates the wheel **604** clockwise, a playhead representation 606 may advance across the statistics view 608 and the corresponding video is played forward. When the user rotates the wheel **604** counter clockwise, the playhead 606 moves across the statistics view in a reverse direction and the corresponding video is played in the reverse direction. When user does not move the wheel the statistics view and video view are paused. The speed of the video is proportional to the rotation speed of the wheel **604**. In at least one embodiment, the video can be shown on an external display **620**, thus enabling, for example, a way for the coach to share the video with the team. In at least one embodiment, at least one gesture controls a playback speed and a playback direction of the combined information.

The overlay wheel may be displayed at the top of the screen after a certain time out of having two fingers positioned on the touch screen. In at least one embodiment, to avoid an unwanted display of the wheel 604, a time out of approximately 400 msec can be implemented to overcome any accidental interpretation of other gestures with two or more fingers. The wheel will appear after said time out. Thus, the at least one gesture is recognized after remaining stable for a predetermined period of time.

The playhead **606** can be dragged along the statistics view and can be set to a position representing a specific moment in the match. Wheel **604** may not be presented when the play head **606** is moving. Similar to the embodiment described above, the wheel **604** may only be displayed when the play head **606** is stable within for approximately 400 milliseconds. This solution provides much faster performance considering, that most of the time, the coach will use remote footage, and seeking might take some time.

While the embodiment of Figure 6 depicts the gesture control **604** in the statistics view **608**, it should be understood that the gesture control may also be shown in the video view **610** and that scrolling through the video view would cause a corresponding scrolling of the statistics view.

In another embodiment, characteristics of the playhead **606** may change according to a play rate, i.e. a video play rate. As an example, when paused, the playhead **606** may have a solid white color, and may continuously change its opacity, creating a simple pulsing effect. However, this is merely an example and different playhead **606** states can be applied, when i.e. current player time is out/in the game time, etc. An ordinary person skilled in the art would appreciate that the time values, such as 400 msec, or color variations are exemplary and that there can be other variations of the time out period or colors which may be implemented, for example, for aesthetic reasons or according to user preferences. These examples should not unduly limit the scope of the application herein.

In at least one embodiment, rich content may be used in the user interface (UI), where gestures are the domain of controlling the system user interface (UI). A gesture on top of the timeline screen in the user interface (UI) can be divided in two main categories viz. Timeline scroll & resize gestures and Playback control gestures.

Timeline scroll and resize gestures may be implemented for vertical synchronized scroll gestures. The above mentioned views can be referred as (SZTimelineView, SZStatsView, and SZLabelsView) and also may also respond to a pinch to resize the timeline and to a horizontal timeline scroll gesture. Playback control gestures may include a Playhead **606** move gesture, a tap with two fingers (play/pause), or two finger fine seeking with wheel **604**, and a tap to select a timeline event.

One or more embodiments include a method to prevent wrong recognition of gestures, hereinafter referred to as "UlGestureRecognizer", a delegate protocol class that prevents or allows simultaneous gesture recognition. For implementing the method, simultaneous recognition may be disabled for all UlGestureRecognizersclasses and subclasses, except a scrolling gesture recognizer, so the timeline can be moved simultaneously to all directions using the wheel **604** i.e. using a two finger fine-seeking gesture. Although there are gestures available to seek to a desired moment in the game, none of them (tap to select event, or dragging the playhead **606**) provides fine seeking, frame by frame or second by second in the game. This type of seeking is advantageous when the coach or other observer wants to go through a certain moment in the game step by step. This may be implemented with wheel **604** which may be displayed as an overlay on top of a UI showing statistics or on top of a UI showing videos. The presently disclosed embodiments suggest a solution implementing this gesture, for events on the timeline and for selecting or playing back a particular segment of video. In one or more embodiments, the two finger rotational gesture may include a fine scrubbing gesture. The system enables gesture control which is responsive to the velocity of the scrolling i.e. when scrolling is faster, the video is forwarded faster.

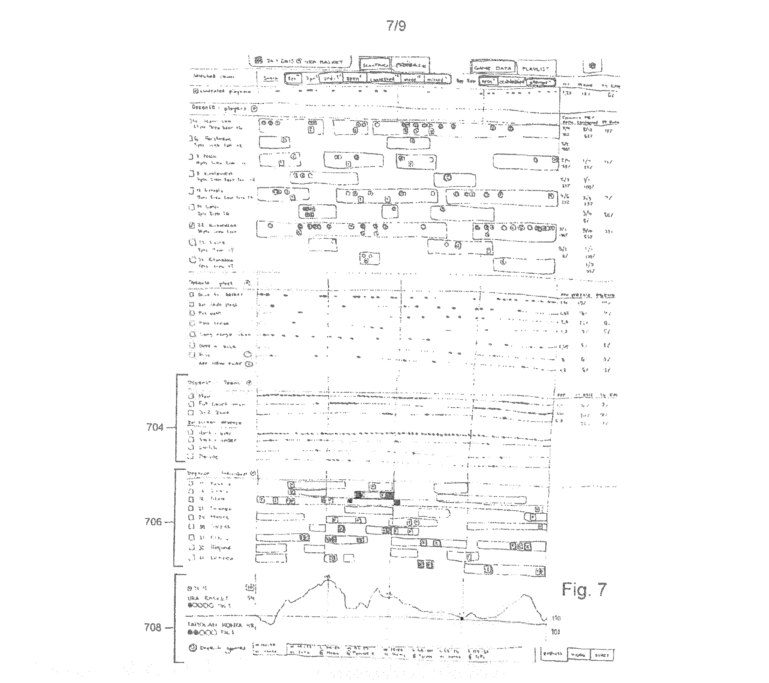

Figure 7 presents team and individual defense panels that show the defensive strategy and defensive events of a team. The defensive strategy panel **704** may include information about defense types, for example, man to man or zone, and may include information about specific defensive formations, for example, 3-2 zone. The team defense panel may also show information on the defensive approach to ball screens. Individual defense panel **706** may include information on players on court and icons of defensive events associated with a certain player.

A score graph section **708** may represent score changes within the game time. The graph shows a score difference so the coach has a great overview as to which team is in a better situation within a certain game time. On the side panels, game specific data are displayed. In order to display game data for the other team, sections of the side panels are mirrored below the score graph.

The gestures described above may be implemented by sub classing the "UlGestureRecognizer". The "UlGestureRecognizer" has following states: When recognizing this gesture, the existence of multiple gestures is taken into account. The problem is solved by keeping the gesture in state "Possible" for 400 milliseconds, without going forward to "Begin" state. During this threshold period, initializing of any other gesture recognizer can cancel this gesture recognizer. The reason is to prevent simultaneous pinch to resize and fine seeking. When started, the gesture takes the middle point between two fingers and detects the changes in angle between this middle point and the point of the gesture recognizer "UlView" property. This angle also defines the velocity, because the gesture recognizer period is constant. According to this angle, the number of frames to seek is calculated. When the gesture is changed, used gets immediate response by popping up the rotational reel on the top of the screen. The reel is rotating according to the rotational angle. It is visible in both modes, when the gesture is recognized. This gesture provides a very good control on the video playback and is very effective and user-friendly. It also simulates the real reel scrolling such that the user experience about this gesture is even more enhanced. This is merely an example of one of the gestures which makes video playback control on this system user interface (UI) unique. An ordinary person skilled in the art would appreciate that the time values such as 400 msec or number of fingers used to activate the gesture are merely examples. There can be other variations of said features for functional reasons or to adjust user preferences. These examples should not unduly limit the scope of the embodiments disclosed herein.

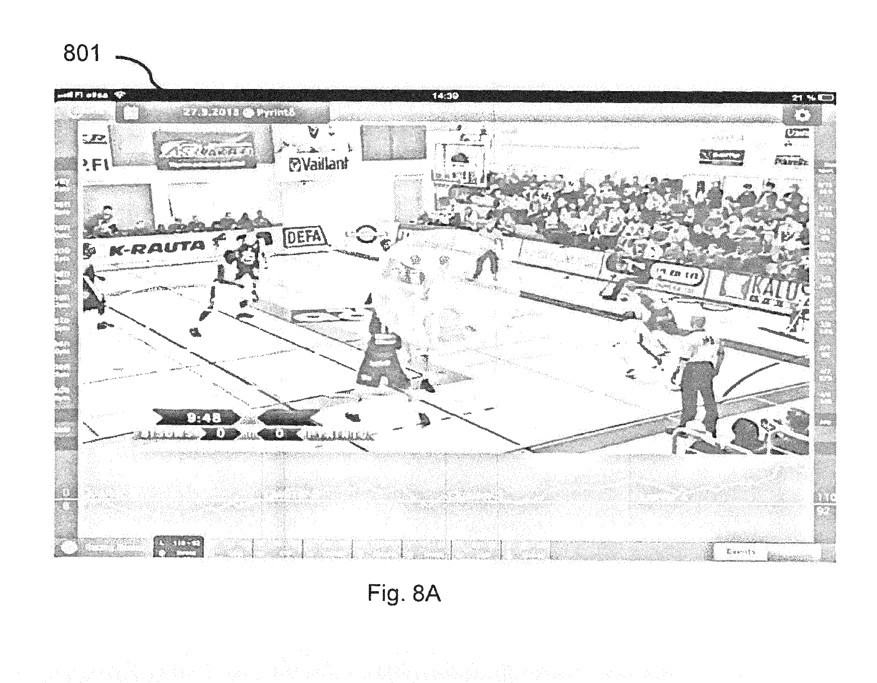

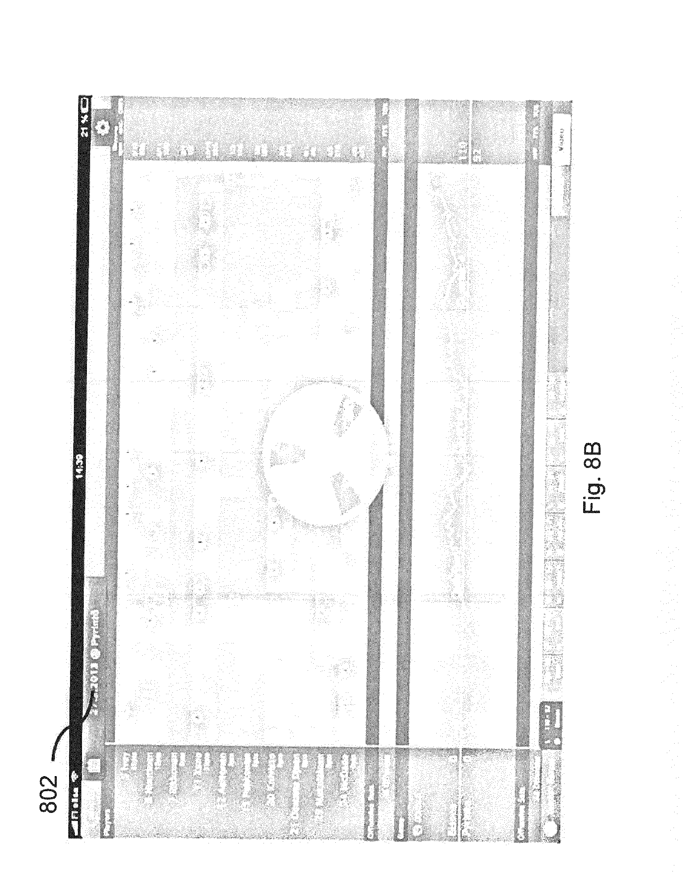

Figures 8A and 8B are additional exemplary views of a screen while using the user interface (UI) and a gesture recognition implementation in the User interface (UI). Figures 8A and 8B show use of the disclosed embodiments in the video view 801 and in the statistics view 802. At least one of the exemplary embodiments may be implemented on a web enabled wireless device as described above, for example, an iPad®.

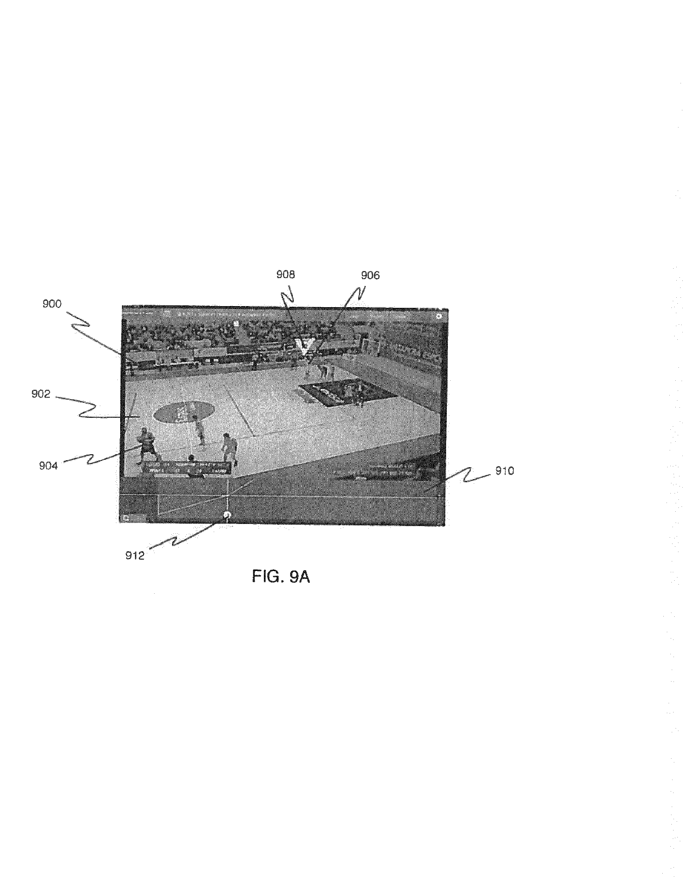

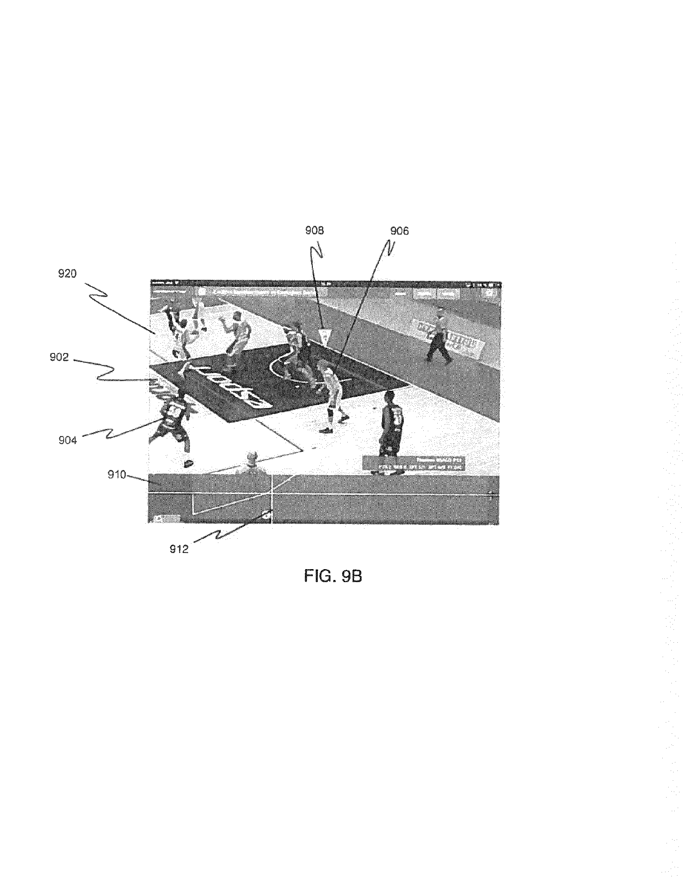

Figures 9A and 9B illustrate additional exemplary combination video and statistic views **900**, **920** that may be displayed on the user interface (UI). Players 904, 906 are playing basketball game in a game field, or video view **902.** The video position related to the time line is shown with marker 912 in the statistic view 910. The statistic view shows statistics of the selected player 906. The player 906 has been selected by pointing the UI with a pointer such as a mouse, finger (in a touch screen) or other pointing device. An information field 908 may be displayed above the player 906. The information field 908 can describe, for example, the player's number, name, or any other suitable information. The information field 908 may follow the player as the video is played. The position of the information field with respect to the video is derived using the location data as described above and used to augment the field 908 added to the video.

In at least one embodiment, camera position and orientation data may be collected from video camera systems used to record the event. Using one or more of the camera position, camera location, camera orientation, and collected location data of the players 904, 906, player locations can be determined in each frame of the video. This allows a user to interact with the video in real-time or when re-playing the footage.

A user may select one or more objects to be tracked (e.g. a player, referee, piece of equipment, ball, puck) on the video by tapping on the user interface in the example view 900, 920. The mark/information field 908, showing the selected tracked object's position on the video may be shown. The mark follows the tracked object's location at the video frame as the playback of the video progresses. Additional supplemental information based on the statistics of the tracked object can be shown on the video overlay/statistics field 910.

A user can zoom in or out at the tracked object at any time. The zoomed display 920 as shown in Figure 9B, may provide the tracked object's game situation in the video and follows it as the video playback progresses back or forth. A time line position of the video is indicated with marker 912. According to the particular game situation the tracked object may or may not be in the middle of the zoomed frame. Using a pinch zoom gesture, the zoom level can be adjusted when the video when the video playback is enabled, or when the video playback is paused. The flow of the gesture may not affect the video playback, as the zoom gesture progresses, the video playback continues with a transitional zoom level.

One of ordinary skill in the art would recognize many variations, alternatives, and modifications of embodiments herein.

One or more of the disclosed embodiments can be used for various purposes, including, though not limited to, enabling users to view game statistics, game videos, build game strategies, entertainment, browse video catalogues, etc.

Modifications to the embodiments described in the foregoing are possible without departing from the scope of the presently disclosed embodiments as defined by the accompanying claims. Expressions such as "including", "comprising", "incorporating", "consisting of", "have", "is" used to describe and claim the disclosed embodiments are intended to be construed in a non-exclusive manner, namely allowing for items, components or elements not explicitly described also to be present. Reference to the singular is also to be construed to relate to the plural.

## Claims

1. A system comprising:
a processor; and
computer readable program code stored on a computer readable medium,
the processor, with the computer readable program code, configured to:
detecting a gesture of the user using a mobile device with a touch screen with multi touch detecting capabilities, a gesture detecting operation calculating a middle point between two fingers and detecting the changes in an angle between the middle point and a, point of the gesture detecting operation;
based upon the change of angle, calculating the rotation velocity of a reel; wherein the rotation velocity of the reel is adapted to define playback parameters.

2. The system of claim 1, wherein the processor, with the computer readable program code, is further configured to control a display of the combined information using gestures.

3. The system of claim 1, wherein at least one gesture controls a playback speed and a playback direction of the combined information.

4. The system of claim 1, wherein the at least one gesture is recognized after remaining stable for a predetermined period of time and the gesture is substantially rotational.

5. The system of claim 1, wherein the processor, with the computer readable program code, is further configured to display the common time line in a statistical view and a video view.

6. The system of claim 1, wherein the processor, with the computer readable program code, is further configured to provide a gesture control mechanism in at least one of the statistical view and video view.

7. The system of claim 1, wherein the processor, with the computer readable program code, is further configured to provide a gesture control mechanism such that playback in the statistics view and video view are synchronized.

8. A method comprising:
detecting a gesture of the user using a mobile device with a touch screen with multi touch detecting capabilities, a gesture detecting operation calculating a middle point between two fingers and detecting the changes in an angle between the middle point and a, point of the gesture detecting operation; based upon the change of angle, calculating the rotation velocity of a reel; wherein the rotation velocity of the reel is adapted to define playback parameters.

9. The method of claim 8, comprising controlling a display of the combined information using gestures.

10. The method of claim 8, comprising using at least one gesture to control a playback speed and a playback direction of the combined information.

11. The method of claim 8, comprising recognizing the at least one gesture after the gesture remains stable for a predetermined period of time.

12. The method of claim 8, comprising displaying the common time line as a combination statistical view and video view.

13. The method of claim 8, comprising providing a gesture control mechanism in at least one of the statistical view and video view.

14. The method of claim 8, comprising providing a gesture control mechanism such that playback in the statistics view and video view are synchronized.
